# EUROPEAN PATENT APPLICATION

(11) **EP 3 584 556 A1**
(43) Date of publication of application: **25.12.2019**
(21) Application number: 19178845.4
(22) Date of filing: 06.06.2019
(51) Int. Cl.: G01L 23/18, G01L 23/28

(54) **PRESSURE SENSOR WITH HEATER**

(30) Priority: 20.06.2018 JP 2018116696; 01.03.2019 JP 2019037466
(71) Applicant: NGK Spark Plug Co., Ltd., Aichi 467-8525 (JP)
(72) Inventor: NAKAMURA, Yoshihiro, Nagoya-shi, Aichi 4678525 (JP); SASSA, Akimitsu, Nagoya-shi, Aichi 4678525 (JP); NISHIYUKI, Kenjiro, Nagoya-shi, Aichi 4678525 (JP); TSUCHIYA, Hiroki, Nagoya-shi, Aichi 4678525 (JP)
(74) Representative: J A Kemp LLP

(57) **Abstract**

[Objective]

To provide a pressure sensor with heater which restrains the occurrence of an output error of a sensor element while reducing thermal load imposed on the sensor element.

[Means for Solution]

A pressure sensor with heater 10 includes a housing 100 having a seal portion 112 which reduces in diameter toward a forward side in the axial direction and which at least partially comes into contact with an attachment object body in attaching the pressure sensor with heater 10 to the attachment object body. A heater holder 140 is fixed to the housing 100 through a flange portion 145. A sensor element 150 is mounted on a rearward facing surface 141a of a body portion 141 of the heater holder 140. A relation of D1 ≥ L1 ≥ L2 holds among the outside diameter D1 of a rear end 112a of the seal portion 112, the axial length L1 from the rear end 112a of the seal portion 112 to a rearward facing surface 144a of the body portion 141, and the axial length L2 from the rear end 112a of the seal portion 112 to a rearward facing surface 145a of the flange portion 145.

## Description

### [Technical Field]

The present invention relates to a pressure sensor with heater.

### [Background Art]

There is known a combustion pressure sensor mounted on an internal combustion engine for measuring the pressure of a combustion chamber. In the combustion pressure sensor, the displacement of a rodlike transmission member axially displaceable with pressure is transmitted to a load detection element disposed on an abutment member, whereby a pressure change in the combustion chamber is detected (see, for example, Patent Document 1).

In the combustion pressure sensor described in Patent Document 1, the load detection element is disposed in the vicinity of a forward end portion of a housing so as to reduce the pressure transmission distance between the load detection element and the transmission member adapted to receive combustion pressure in the combustion chamber, thereby restraining application of mechanical noise to a load obtained from pressure received by the transmission member and thus improving accuracy in detection of combustion pressure.

### [Prior Art Document]

### [Patent Document]

[Patent Document 1] Japanese Patent Application Laid-Open (*kokai*) No. 2008-281471

### [Summary of the Invention]

### [Problem to be Solved by the Invention]

Incidentally, according to Patent Document 1, the abutment member has an abutment portion which directly abuts the cylinder head of an internal combustion engine when the combustion pressure sensor is mounted to the cylinder head. Although heat of the combustion chamber is transmitted to the abutment member through the transmission member, the heat can be immediately released to the internal combustion engine through the abutment portion, thereby reducing thermal load imposed on the load detection element.

However, in the structure in which the abutment member directly abuts the cylinder head, stress (hereinafter, may be called axial stress) applied axially in mounting the combustion pressure sensor to the cylinder head of the internal combustion sensor is imposed on the abutment portion. Accordingly, the abutment member is pulled forward and warps; as a result, the problem of an output error of the load detection element has been encountered. This problem may similarly be encountered by a pressure sensor with heater having a pressure sensor function for measuring pressure in the combustion chamber and a glow plug function for serving as an auxiliary heat source for compression ignition.

The present invention has been conceived to solve the above problem, and an object of the invention is to provide a pressure sensor with heater in which a sensor element is disposed on a heater holder and which restrains the occurrence of an output error of the sensor element while reducing thermal load imposed on the sensor element.

### [Means for Solving the Problem]

A pressure sensor with heater of the present invention comprises a tubular housing extending in an axial direction and having a forward end and a rear end, a rodlike heater which is disposed in the housing in such a manner as to be displaceable in the axial direction and whose forward portion protrudes from the forward end of the housing, an annular heater holder through which the heater is inserted and which connects the housing and the heater, and a sensor element disposed on the heater holder and adapted to detect a displacement of the heater. The housing comprises a first housing and a second housing. The first housing is located on a forward side with respect to the axial direction and has a seal portion and a cylindrical portion. The seal portion reduces in diameter toward the forward side and at least partially comes into contact with an attachment object body in attaching the pressure sensor with heater to the attachment object body. The cylindrical portion extends rearward of the seal portion in the axial direction. The second housing is located rearward of the first housing. The heater holder has a body portion having an annular rearward facing surface facing a rear side with respect to the axial direction and a flange portion protruding from an outer circumferential surface of the body portion and fixed between the first housing and the second housing, and seals a space between an inner circumferential surface of the second housing and an outer circumferential surface of the heater. The sensor element is mounted on the rearward facing surface of the body portion of the heater holder. A relation of D1 ≥ L1 ≥ L2 holds among an outside diameter D1 (mm) of a rear end of the seal portion, an axial length L1 (mm) from the rear end of the seal portion to the rearward facing surface of the body portion, and an axial length L2 (mm) from the rear end of the seal portion to a rearward facing surface of the flange portion.

The pressure sensor with heater of the present invention is configured such that the heater holder on which the sensor element is mounted has the flange portion and such that the flange portion is fixed between the second housing and the first housing having the seal portion in contact with an attachment object body. That is, the first housing intervenes between the heater holder and the attachment object body. As a result, axial stress is imposed on the first housing, thereby restraining warpage of the body portion which could otherwise result from the flange portion being pulled forward; thus, an output error of the sensor element can be reduced.

Also, in the pressure sensor with heater of the present invention, since a relation of D1 ≥ L1 ≥ L2 holds among the outside diameter D1 of the rear end of the seal portion, the axial length L1 from the rear end of the seal portion to the rearward facing surface of the body portion, and the axial length L2 from the rear end of the seal portion to the rearward facing surface of the flange portion, heat transmitted to the heater holder can be quickly released to an internal combustion engine, thereby restraining imposition of thermal load on the sensor element. Further, since a relation of D1 ≥ L1 is employed, the sensor element is disposed in the vicinity of a forward end portion of the housing, whereby the distance between the sensor element and the heater can be reduced, and thus accuracy in detection of combustion pressure can be improved.

Notably, no particular limitation is imposed on the seal portion so long as the seal portion reduces in diameter toward the forward side with respect to the axial direction; therefore, the seal portion may reduce in diameter linearly toward the forward side with respect to the axial direction or may reduce in diameter toward the forward side with respect to the axial direction such that the seal portion has a curved shape. "The rear end of the seal portion" indicates the position of intersection between the outer circumferential surface of the axially extending cylindrical portion of the first housing and the outer circumferential surface of the diameter-reducing seal portion of the first housing.

Further, the flange portion is a portion fixed between the first housing and the second housing; for example, a fusion zone formed as a result of welding at the boundary between the first housing and the flange portion can be considered a part of the flange portion. That is, "the rearward facing surface of the flange portion" in this case indicates (the rearmost end of) the rearward facing surface of the fusion zone.

Preferably, in the pressure sensor with heater of the present invention, the axial length L1 and the axial length L2 hold a relation of L1 > L2; the heater holder has a facing portion provided at at least the rear side of the body portion of the heater holder and facing the second housing; and an outer circumferential surface of the facing portion of the heater holder is located away from an inner circumferential surface of the second housing. By virtue of such a structural feature, the body portion easily warps as a result of displacement of the heater, whereby accuracy in detection of combustion pressure can be improved.

Incidentally, in the above structure in which the facing portion is located away from the inner circumferential surface of the second housing, the body portion easily warps as a result of displacement of the heater; consequently, in some cases, an output error of the sensor element has occurred as a result of warpage of the body portion caused by axial stress. In this connection, preferably, in the pressure sensor with heater of the present invention, an axial length L3 (mm) of the facing portion and an outside diameter D2 (mm) of the rearward facing surface hold a relation of L3 > D2/2. By virtue of such a structural feature, even in the event of application of axial stress, warpage of the body portion caused by the axial stress can be restrained, whereby an output error of the sensor element can be further reduced.

Preferably, in the pressure sensor with heater of the present invention, the body portion of the heater holder has a contact portion in contact with the second housing and located forward of the facing portion. By virtue of such a structural feature, even in a structure in which the body portion has the facing portion located away from the second housing, the heater holder can be favorably fixed to the second housing by means of the contact portion. More preferably, of a region of the body portion which faces the second housing, a rear portion serves as the facing portion, and a forward portion serves as the contact portion.

The pressure sensor with heater of the present invention may be configured as follows: the inside diameter of the cylindrical portion is greater than the outside diameter of the facing portion. By virtue of such a structural feature, axial stress is more imposed on the first housing, whereby warpage of the body portion can be restrained, and thus an output error of the sensor element can be further reduced.

The pressure sensor with heater of the present invention may be configured as follows: the body portion of the heater holder has an extension portion extending forward of the flange portion, and an outer circumferential surface of the extension portion of the heater holder is located away from an inner circumferential surface of the first housing. By virtue of such a structural feature, while axial stress is more imposed on the first housing, axial stress is unlikely to be imposed on the extension portion, whereby warpage of the body portion can be restrained, and thus an output error of the sensor element can be further reduced.

The pressure sensor with heater of the present invention may be configured as follows: the body portion of the heater holder comprises a first annular wall in contact with the outer circumferential surface of the heater, a second annular wall facing the inner circumferential surface of the second housing and shorter than the first annular wall, a connection wall having the rearward facing surface and connecting the first annular wall and the second annular wall, and an annular groove defined by the first annular wall, the second annular wall, and the connection wall, and the flange portion is formed on an outer circumferential surface of the second annular wall. As a result of the heater holder having such a structural feature, the above-mentioned effects can be sufficiently yielded.

### [Brief Description of the Drawings]

[FIG. 1] Exterior view of a pressure sensor with heater according a first embodiment.
[FIG. 2] Sectional view of the pressure sensor with heater according to the first embodiment.
[FIG. 3] Enlarged sectional view of a portion of the pressure sensor with heater according to the first embodiment, which portion is located around a heater holder of the pressure sensor.
[FIG. 4] Perspective sectional view of the heater holder cut by a vertical plane passing through the center of the heater holder.
[FIG. 5] Explanatory diagram showing the results of verification of the effect of axial stress on a sensor output in the pressure sensor with heater according to the first embodiment and the pressure sensor with heater of a comparative example.
[FIG. 6] Explanatory view schematically showing a section of a portion of the pressure sensor with heater according to the first embodiment, which portion is located in the vicinity of the forward end of a housing of the pressure sensor.
[FIG. 7] Explanatory diagram showing the relation between a temperature at a mounting position of a sensor element and the ratio of a length from the rear end of a seal portion of a first housing to the rearward facing surface of a connection wall of the heater holder to the outside diameter of the rear end of the seal portion.
[FIG. 8] Explanatory view schematically showing a section of a portion of a pressure sensor with heater serving as a comparative example, which portion is located in the vicinity of the forward end of a housing of the pressure sensor.
[FIG. 9] Explanatory view schematically showing a section of a portion of a pressure sensor with heater according to a second embodiment, which portion is located in the vicinity of the forward end of a housing of the pressure sensor.
[FIG. 10] Explanatory diagram showing the results of verification of the effect of axial stress on a sensor output in the pressure sensor with heater according to the first embodiment and the pressure sensor with heater according to the second embodiment.
[FIG. 11] Explanatory view schematically showing a section of a portion of a pressure sensor with heater according to a second modified embodiment, which portion is located in the vicinity of the forward end of a housing of the pressure sensor.
[FIG. 12] Explanatory view schematically showing a section of a portion of a pressure sensor with heater according to a third modified embodiment, which portion is located in the vicinity of the forward end of a housing of the pressure sensor.
[FIG. 13] Explanatory view schematically showing a section of a portion of a pressure sensor with heater according to a fourth modified embodiment, which portion is located in the vicinity of the forward end of a housing of the pressure sensor.

### [Modes for Carrying out the Invention]

### First embodiment:

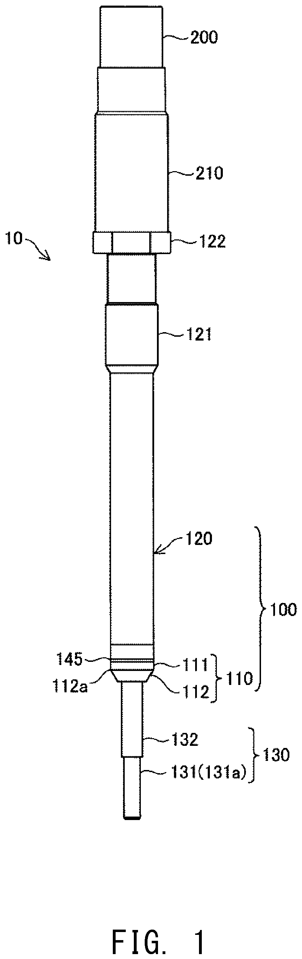

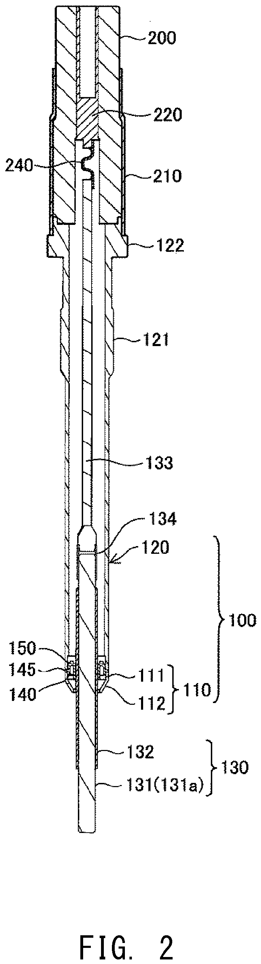

FIG. 1 is an exterior view of a pressure sensor with heater according a first embodiment. FIG. 2 is a sectional view of the pressure sensor with heater according to the first embodiment. FIG. 2 is a longitudinal sectional view of the pressure sensor with heater cut by a vertical plane which contains the center axis of the pressure sensor with heater.

As shown in FIGS. 1 and 2, a pressure sensor with heater 10 includes a housing 100, a heater 130, a heater holder 140, a sensor element 150, a connector member 200, and a protection tube 210. In the first embodiment, in common with component members, an axial direction means a direction in which the center axis of the housing 100 extends; a forward side means a side on which the heater 130 is exposed; and a rear side means a side on which the protection tube 210 is located. Notably, the axial direction of the housing 100 coincides with the axial direction of the pressure sensor with heater 10. In the component members, a surface facing the rear side with respect to the axial direction is called a rearward facing surface, and a surface facing the forward side is called a forward facing surface.

The housing 100 is a tubular member extending along the axial direction thereof and having a forward end and a rear end and is composed of a first housing 110 located on the forward side and a second housing 120 located rearward of the first housing 110. In the first embodiment, the housing 100 is a cylindrical metal member formed of carbon steel or stainless steel. Specifically, in the housing 100, the connector member 200 is disposed at the rear end of the second housing 120, and the second housing 120 and the connector member 200 are mechanically connected by the protection tube 210. The connector member 200 is a cylindrical member formed of an electrically insulating material such as an insulating resin. The connector member 200 holds a terminal member 220 in a hollow portion thereof. The protection tube 210 is a cylindrical member formed of an electrically conductive material such as stainless steel. The forward end of the protection tube 210 is joined to the rear end of the second housing 120. Stainless steel used in the first embodiment to form a member depends on the position of the member; for example, SUS410, SUS430, SUS630, SUS303, or SUS304.

The first housing 110 has a cylindrical portion 111 and a seal portion 112 tapered (inclined) in such a manner as to reduce in diameter toward the forward side from the cylindrical portion 111. A transition portion from the cylindrical portion 111 to the seal portion 112; i.e., a corner portion in the first embodiment, forms a rear end 112a of the seal portion 112. The first housing 110 has the same thickness along the overall length thereof. The heater 130 protrudes from a forward end opening of the seal portion 112, and the inside diameter of the opening is greater than the outside diameter of the heater 130. In the pressure sensor with heater 10 according to the first embodiment, the seal portion 112 of the first housing 110 at least partially comes into contact with an attachment object body; specifically, the cylinder head (not shown) of an internal combustion engine. When the pressure sensor with heater 10 is mounted to the cylinder head of the internal combustion engine, the seal portion 112 at least partially comes into pressure contact with a plug opening portion (not shown) of the cylinder head, thereby providing gastightness of a combustion chamber of the internal combustion engine. For example, in the case where the seal portion 112 is in line contact with the plug opening portion, gastightness is realized by a circular seal line in a plan view. This is a mode of contact between the seal portion 112 and the plug opening portion in which at least a portion of the seal portion 112 comes into contact with the plug opening portion. In the case where the seal portion 112 and the plug opening portion have certain shapes, the entire seal portion 112 may come into contact with the plug opening portion (i.e., surface contact).

The second housing 120 has an approximately cylindrical shape along the overall length thereof. The second housing 120 has a collar portion 122 formed at a rear end portion thereof. The second housing 120 has a threaded portion 121 formed in the vicinity of the rear end thereof for fixing the pressure sensor with heater 10 to the cylinder head of the internal combustion engine. The threaded portion 121 has an external thread (not shown) formed thereon. The pressure sensor with heater 10 is fixed to the internal combustion engine as a result of the threaded portion 121 being threadingly engaged with an internal thread (not shown) formed on the wall of a plug attachment hole of the cylinder head.

The heater 130 includes a heater member 131, a sleeve 132 covering an intermediate portion of the heater member 131, an axial rod 133 disposed at the rear end of the heater member 131, and a ring 134 connecting the heater member 131 and the axial rod 133. The heater member 131 is a rodlike heat-generating element formed of a ceramic composition and composed of a substrate 131a and a heat-generating resistor (not shown) in a predetermined pattern embedded in the substrate 131a. The substrate 131a is formed of an electrically insulating ceramic material; for example, an electrically insulating ceramic material containing silicon nitride (Si₃N₄) as a main component. The heat-generating resistor is formed of an electrically conductive ceramic material; for example, an electrically conductive ceramic material containing a mixture of tungsten carbide (WC) and silicon nitride (Si3N4) as a main component. A positive electrode and a negative electrode are connected to the heat-generating resistor; the positive electrode is electrically connected to the ring 134 to be described later; and the negative electrode is electrically connected to the sleeve 132.

The sleeve 132 is a cylindrical metal member and is formed of, for example, stainless steel. The heater member 131 is press-fitted into the sleeve 132 and protrudes from the forward and rear ends of the sleeve 132. As a result of the heater member 131 being fitted into the sleeve 132, the heater 130 can be joined by welding to the heater holder 140 made of metal.

The axial rod 133 is a circular columnar metal member and is formed of, for example, stainless steel. The ring 134 is a cylindrical metal member formed of stainless steel. The rear end of the heater member 131 is press-fitted into the forward end of the ring 134, whereas the forward end of the axial rod 133 is press-fitted into the rear end of the ring 134. The ring 134 mechanically and electrically connects the heater member 131 and the axial rod 133. The rear end of the axial rod 133 is mechanically and electrically connected to the terminal member 220 through a terminal spring 240. The terminal spring 240 is an electrically conductive, elastic member formed of, for example, stainless steel and assumes the form of a plate spring having curved portions. The terminal spring 240 absorbs displacement of the heater member 131 and the axial rod 133 which move in the axial direction as a result of pressure fluctuations in a combustion chamber.

The pressure sensor with heater 10 according to the first embodiment is powered as follows: electric power is externally input to the connector member 200 through a power supply line (not shown), and the input electric power is supplied to the positive electrode of the heater member 131 through the terminal spring 240, the axial rod 133, and the ring 134.

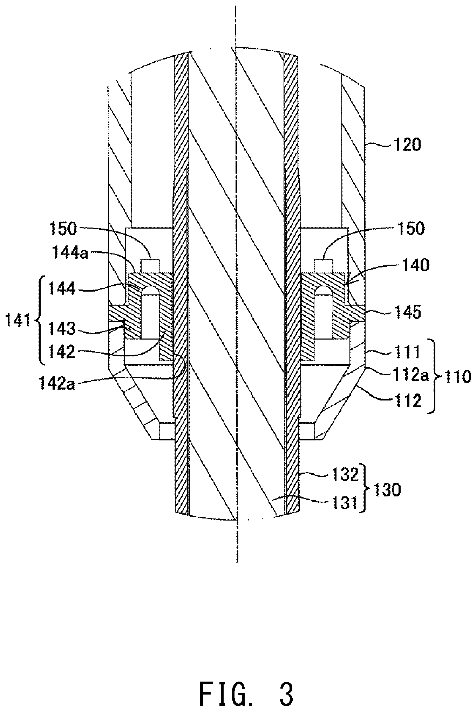

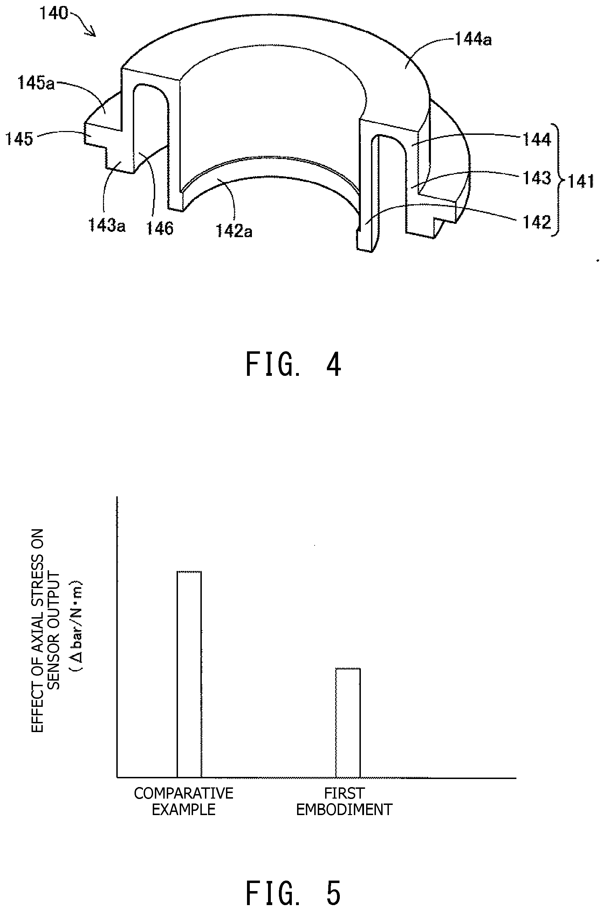

The heater holder 140 is a metal member having an annular form in plan view and adapted to displaceably hold the heater 130 in the housing 100. The heater holder 140 is formed of a nickel alloy containing Fe, Cr, Nb, Mo, etc. FIG. 3 is an enlarged sectional view of a portion of the pressure sensor with heater 10 according to the first embodiment, which portion is located around the heater holder thereof. FIG. 4 is a perspective sectional view of the heater holder 140 cut by a vertical plane passing through the center of the heater holder. For clear illustration, FIG. 4 omits hatching indicative of section. The heater holder 140 includes an approximately annular body portion 141 and a flange portion 145 protruding along the entire circumference of the outer circumferential surface of the body portion 141. The body portion 141 includes a first annular wall 142 in contact with the outer circumferential surface of the heater 130 (sleeve 132), a second annular wall 143 facing the inner circumferential surface of the second housing 120 and shorter than the first annular wall 142, and a connection wall 144 connecting the first annular wall 142 and the second annular wall 143. Mainly through deformation of the connection wall 144, the heater 130 is displaceable in the axial direction in the housing 100. The body portion 141 further includes an annular groove 146 defined by the first annular wall 142, the second annular wall 143, and the connection wall 144. The annular groove 146 opens toward the forward side of the pressure sensor with heater 10 with the connection wall 144 serving as a bottom thereof. The first annular wall 142 can be called an inner annular wall, and the second annular wall 143 can be called an outer annular wall. The first annular wall 142 defines a hole through which the heater 130 is inserted.

The first annular wall 142 has a ring-shaped protrusion 142a formed at a forward end portion of the inner circumferential surface thereof. The first annular wall 142 is joined by welding to the sleeve 132 through the protrusion 142a, and a forward facing surface and a rearward facing surface 145a of the flange portion 145 are joined by welding to the rear end surface of the first housing 110 and the forward end surface of the second housing 120, respectively. As a result, the housing 100 and the heater 130 are connected by the heater holder 140, thereby sealing a space between the inner circumferential surface of the second housing 120 and the outer circumferential surface of the heater 130. In the first embodiment, the first housing 110 comes into contact with the cylinder head, whereas the heater holder 140 does not come into contact with the cylinder head. Further, in the first embodiment, the second annular wall 143 has an extension portion 143a extending forward of the flange portion 145. Notably, the extension portion 143a is greater in outside diameter than a portion (facing portion) of the second annular wall 143 located rearward of the flange portion 145.

Heat from a combustion chamber conducted through the heater 130 is conducted to the heater holder 140 from the protrusion 142a and is then conducted to the first housing 110 from the flange portion 145 through the first annular wall 142, the connection wall 144, and the second annular wall 143. Heat is conducted from the heater holder 140 to the first housing 110 (and the second housing 120) through joints between the flange portion 145 and the first and second housings 110 and 120. Heat conducted to the first housing 110 is conducted to the cylinder head through the rear end 112a of the seal portion 112 in contact with the cylinder head or through a portion of the seal portion 112 in the vicinity of the rear end 112a in contact with the cylinder head. The shorter the heat conduction path from the protrusion 142a to the flange portion 145, the better the heat release, and the greater the degree to which a temperature rise of the pressure sensor with heater 10 can be restrained.

The sensor element 150 is mounted on a rearward facing surface 144a of the connection wall 144 of the heater holder 140. The sensor element 150 is joined to the rearward facing surface 144a by, for example, heat-resistant glass. No particular limitation is imposed on the sensor element 150 so long as the sensor element 150 can convert a mechanical displacement to an electrical change; for example, a strain gauge or a piezoresistive element can be used as the sensor element 150. An integrated circuit (not shown) disposed at a predetermined position in the housing 100 is electrically connected to the sensor element 150. Upon displacement in the axial direction of the heater 130 in response to a change in pressure (combustion pressure) in the combustion chamber, the heater holder 140 connected to the sleeve 132 is deformed. The integrated circuit detects (measures) the deformation of the heater holder 140 on the basis of a change in resistance of the sensor element 150, thereby detecting the combustion pressure of the internal combustion engine. The integrated circuit outputs an electric signal indicative of the detected combustion pressure to an external controller; for example, an engine controller, through a wiring line inserted into the connector member 200.

FIG. 5 is an explanatory diagram showing the results of verification of the effect of axial stress on a sensor output in the pressure sensor with heater 10 according to the first embodiment and the pressure sensor with heater of a comparative example. The pressure sensor with heater of the comparative example was configured as follows: as in the case of Patent Document 1, a member on which the sensor element is mounted is in direct contact with the cylinder head. An index indicative of the effect of axial stress applied to the pressure sensor with heater on the sensor output is obtained as follows: the signal (representing pressure (bar)) output from the sensor element in tightening the pressure sensor with heater with a torque of 1 N·m is measured to thereby obtain pressure per unit torque (Δ bar/N·m), which is used as the index. The vertical axis of FIG. 5 indicates pressure per unit torque (Δ bar/N·m).

According to the results of the verification, pressure per unit torque (Δ bar/N·m)in the pressure sensor with heater 10 according to the first embodiment reduced by about 53% that of the comparative example. In many cases in actual working environments, axial stress is applied to the pressure sensor with heater due to the effect of distortion of the cylinder head, etc. A sensor output which is output from the pressure sensor with heater as a result of application of axial stress is irrelevant to combustion pressure and becomes noise in detection of combustion pressure. Therefore, the smaller the output component output from the sensor element as a result of application of axial stress, the more the effect of axial stress can be reduced, whereby combustion pressure can be obtained more accurately.

In the pressure sensor with heater 10 according to the first embodiment, the heater holder 140 on which the sensor element 150 is mounted has a structure in which the flange portion 145 thereof is disposed between the first housing 110 and the second housing 120; i.e., the heater holder 140 does not come in direct contact with the cylinder head. By contrast, in the comparative example, the member on which the sensor element is mounted comes in direct contact with the cylinder head. Therefore, in the pressure sensor with heater 10 according to the first embodiment configured such that the heater holder 140 on which the sensor element 150 is mounted does not come in direct contact with the cylinder head, there can be restrained warpage of the body portion 141 which could otherwise result from the flange portion 145 being pulled forward as a result of application of axial stress to the first housing 110, whereby accuracy of sensor output can be improved; thus, more accurate combustion pressure can be obtained.

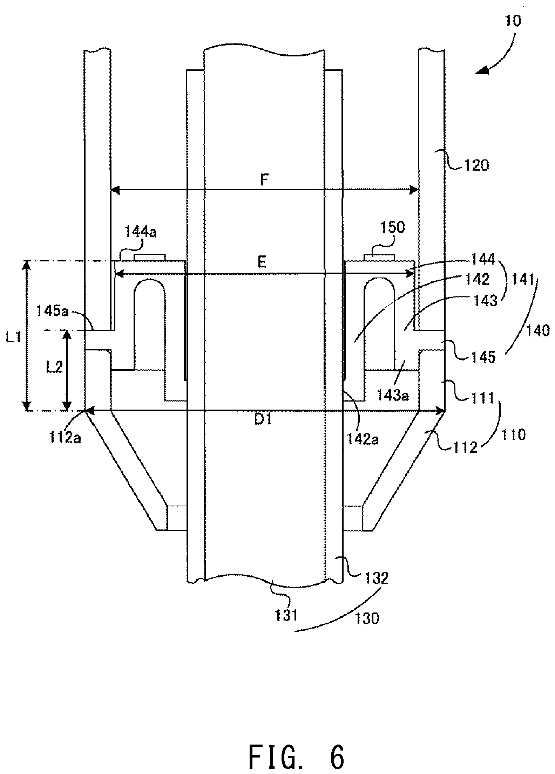

Next, there will be described the relation between the outside diameter of the rear end 112a of the seal portion 112 of the first housing 110 and the position of the heater holder 140 in relation to the rear end 112a of the seal portion 112 in the pressure sensor with heater 10 according to the first embodiment. FIG. 6 is an explanatory view schematically showing a section of the pressure sensor with heater 10 according to the first embodiment, which portion is located in the vicinity of the forward end of the housing thereof. For clear illustration, FIG. 6 and subsequent drawings omit hatching indicative of section. In the pressure sensor with heater 10 according to the first embodiment, the rear end 112a of the seal portion 112 of the first housing 110 has an outside diameter D1 (mm). The heater holder 140 is located in such a manner as to have a length L1 (mm) between the rearward facing surface 144a of the connection wall 144 and the rear end 112a of the seal portion 112 and a length L2 (mm) between the rearward facing surface 145a of the flange portion 145 and the rear end 112a of the seal portion 112. In the pressure sensor with heater 10 according to the first embodiment, a relation of D1 ≥ L1 ≥ L2 holds among the outside diameter D1, the axial length L1 from the rear end 112a of the seal portion 112 to the rearward facing surface 144a of the connection wall 144, and the length L2 from the rear end 112a of the seal portion 112 to the rearward facing surface 145a of the flange portion 145. Also, the outer circumferential surface of the second annular wall 143 of the heater holder 140 is located away from the inner circumferential surface of the second housing 120; i.e., the second annular wall 143 of the heater holder 140 and the second housing 120 are located away from each other, so that heat is not directly conducted from the second annular wall 143 to the second housing 120.

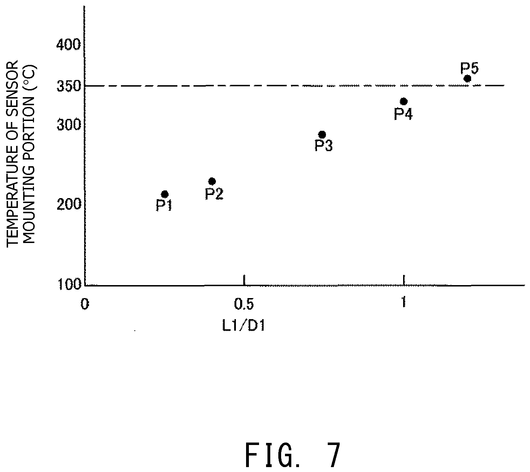

Next will be described the technical meaning of a relation of D1 ≥ L1 ≥ L2 among the outside diameter D1, the length L1, and the length L2. FIG. 7 is an explanatory diagram showing the relation between a temperature at a mounting position of the sensor element and the ratio of a length from the rear end of the seal portion of the first housing to the rearward facing surface of the connection wall of the heater holder to the outside diameter of the rear end of the seal portion. In FIG. 7, the vertical axis indicates the temperature (°C) of the heater holder at a position where the sensor element is mounted, and the horizontal axis indicates the ratio R of the length L1 to the outside diameter D1 (R = L1/D1). The temperature at the position where the sensor element 150 was mounted was measured for the case where the ratio R was 0.25 (P1), the case where the ratio R was 0.4 (P2), the case where the ratio R was 0.75 (P3), the case where the ratio R was 1 (P4), and the case where the ratio R was 1.2 (P5). Notably, Pn (n = 1 to 5) indicates plotted points in FIG. 7. The results of measurement are plotted at P1 (ratio: 0.25; temperature: 214°C), P2 (ratio: 0.4; temperature: 229°C), P3 (ratio: 0.75; temperature: 287°C), P4 (ratio: 1; temperature: 329°C), and P5 (ratio: 1.2; temperature: 360°C). Generally, at a temperature in excess of 350°C, the sensor element 150 and glass fail to provide sufficient heat resistance, and the sensor element 150 is apt to become defective. Therefore, the temperature at the position where the sensor element 150 is mounted is desirably less than 350°C. According to the results shown in FIG. 7, when the ratio R is 1, the temperature at the position where the sensor element 150 is mounted is 329°C; thus, the sensor element 150 can function normally. Therefore, the ratio R is desirably equal to or less than 1 (R ≤ 1); i.e., a relation of D1 ≥ L1 is desirable. A relation D1 > L1 is more desirable; specifically, the shorter the axial length L1 in relation to the outside diameter D1, the more the heat release from the pressure sensor with heater 10 to the cylinder head improves, whereby the temperature at the position where the sensor element 150 is mounted can be more lowered. A plotted point corresponding to the pressure sensor with heater 10 according to the first embodiment is P2; i.e., the ratio R is 0.4, and the temperature is 229°C.

Regarding the relation between the length L1 and the length L2, independently forming the flange portion 145 rearward of the rearward facing surface 144a of the connection wall 144 is disadvantageous to heat release, and the maximum value of the length L2 is equal to the length L1. That is, the rearward facing surface 145a of the flange portion 145 and the rearward facing surface 144a of the connection wall 144 are flush with each other. Meanwhile, the flange portion 145 is formed on the second annular wall 143 and is located forward of the rearward facing surface 144a of the connection wall 144. Therefore, a relation of the length L1 ≥ the length L2 holds true. As mentioned previously, in view of heat release, the flange portion 145 is located desirably near the rear end 112a of the seal portion 112; thus, a relation of the length L1 > the length L2 is desirable. The pressure sensor with heater 10 according to the first embodiment satisfies a relation of L1 > L2.

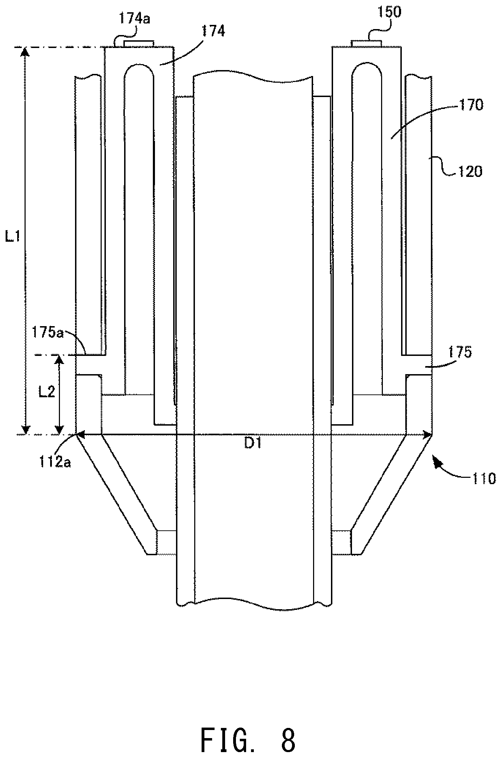

FIG. 8 is an explanatory view schematically showing a section of a portion of a pressure sensor with heater serving as a comparative example, which portion is located in the vicinity of the forward end of the housing thereof. In the comparative example shown in FIG. 8, a heater holder 170 is located in such a manner as to have a length L1 (mm) between a rearward facing surface 174a of a connection wall 174 and the rear end 112a of the seal portion 112 and a length L2 (mm) between a rearward facing surface 175a of a flange portion 175 and the rear end 112a of the seal portion 112, and a relation of L1 > D1 > L2 holds among the outside diameter D1, the length L1, and the length L2. A plotted point in FIG. 7 corresponding to the comparative example of FIG. 8 is P5.

As described above, the pressure sensor with heater 10 according to the first embodiment has a structure in which the heater holder 140 has the flange portion 145 while the flange portion 145 is fixed between the first housing 110 having the seal portion 112 and the second housing 120. That is, since the heater holder 140 does not come in direct contact with the cylinder head, there can be restrained warpage of the body portion 141 which could otherwise result from the flange portion 145 being pulled forward as a result of application of axial stress to the first housing 110, and an adverse effect on a sensor output; i.e., an output component attributable to axial stress in the sensor output, can be reduced, whereby accuracy of the sensor output can be enhanced; thus, an accurate combustion pressure can be obtained.

The pressure sensor with heater 10 according to the first embodiment holds a relation of D1 > L1 > L2 among the outside diameter D1 (mm) of the rear end 112a of the seal portion 112, the axial length L1 (mm) from the rear end 112a of the seal portion 112 to the rearward facing surface 144a of the connection wall 144 in the heater holder 140, and the axial length L2 (mm) from the rear end 112a of the seal portion 112 to the rearward facing surface 145a of the flange portion 145 in the heater holder 140. Therefore, heat transmitted to the heater holder 140 can be quickly released to an internal combustion engine, thereby restraining imposition of thermal load on the sensor element 150. Additionally, since a relation of D1 > L1 holds true, the sensor element 150 can be disposed in the vicinity of a forward end portion of the first housing 110, whereby the distance between the sensor element 150 and the heater 130 can be reduced, and thus accuracy in detection of combustion pressure can be improved.

In the pressure sensor with heater 10 according to the first embodiment, the outer circumferential surface of the second annular wall 143 (facing portion) of the heater holder 140 is located away from the inner circumferential surface of the second housing 120. That is, a diameter E (mm) of the outer circumferential surface of the second annular wall 143 and a diameter F (mm) of the inner circumferential surface of the second housing 120 have a relation of E < F. By virtue of such a structural feature, the body portion 141 easily warps as a result of displacement of the heater 130, whereby accuracy in detection of combustion pressure can be improved.

### Second embodiment:

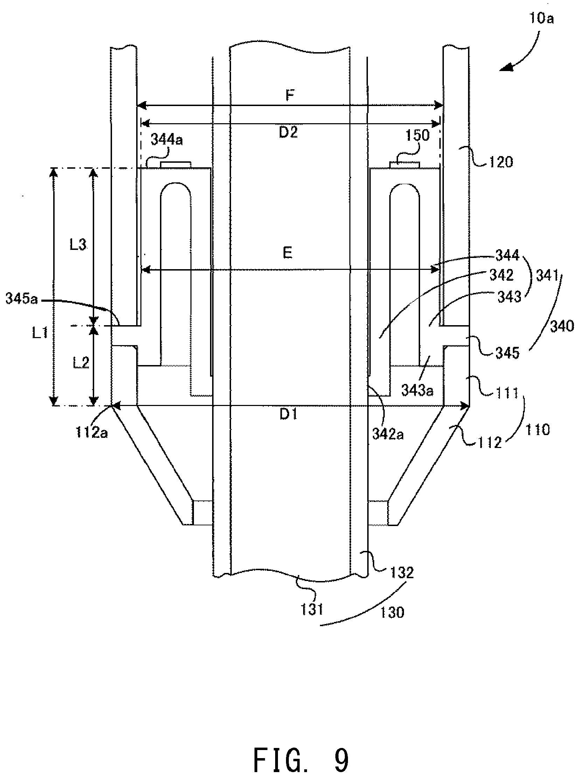

FIG. 9 is an explanatory view schematically showing a section of a portion of a pressure sensor with heater 10a according to a second embodiment, which portion is located in the vicinity of the forward end of the housing thereof. Notably, the second embodiment differs from the first embodiment only in the structure of a heater holder 340, and other structural features are similar to those of the first embodiment; thus, repeated description of structural features similar to those of the first embodiment is omitted or simplified.

As shown in FIG. 9, the pressure sensor with heater 10a has the heater holder 340. The heater holder 340 includes an approximately annular body portion 341 and a flange portion 345 protruding along the entire circumference of the outer circumferential surface of the body portion 341. The body portion 341 includes a first annular wall 342 in contact with the outer circumferential surface of the heater 130 (sleeve 132), a second annular wall 343 facing the inner circumferential surface of the second housing 120 and shorter than the first annular wall 342, and a connection wall 344 connecting the first annular wall 342 and the second annular wall 343. Mainly through deformation of the connection wall 344, the heater 130 is displaceable in the axial direction in the housing 100.

The first annular wall 342 has a ring-shaped protrusion 342a formed at a forward end portion of the inner circumferential surface thereof. The protrusion 342a of the first annular wall 342 is joined by welding to the sleeve 132, and a forward facing surface and a rearward facing surface 345a of the flange portion 345 are joined by welding to the rear end surface of the first housing 110 and the forward end surface of the second housing 120, respectively. As a result, the housing 100 and the heater 130 are connected by the heater holder 340, thereby sealing a space between the inner circumferential surface of the second housing 120 and the outer circumferential surface of the heater 130. Further, in the second embodiment, the second annular wall 343 has an extension portion 343a extending forward of the flange portion 345.

In the pressure sensor with heater 10a according to the second embodiment, a relation of L3 > D2/2 holds between an axial length L3 (mm) from the rearward facing surface 345a of the flange portion 345 to the rearward facing surface 344a of the connection wall 344 (i.e., the length of the facing portion) and an outside diameter D2 (mm) of the rearward facing surface 344a of the connection wall 344. The heater holder 340 of the pressure sensor with heater 10a holds a relation of L1 > L2, and the outer circumferential surface of the second annular wall 343 (facing portion) is located away from the inner circumferential surface of the second housing 120. In the case of such a structure of the heater holder 340, the body portion 344 easily warps as a result of displacement of the heater 130; consequently, in some cases, an output error of the sensor element occurs as a result of warpage of the body portion 344 caused by axial stress. By contrast, if the above relation holds true, even in the event of application of axial stress, warpage of the body portion 344 caused by the axial stress can be restrained, whereby an output error of the sensor element 150 can be further reduced.

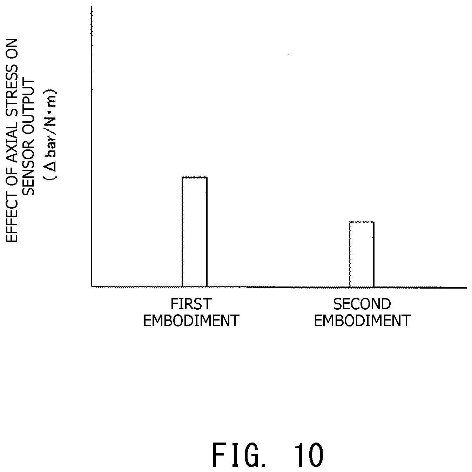

FIG. 10 is an explanatory diagram showing the results of verification of the effect of axial stress on a sensor output in the pressure sensor with heater 10 according to the first embodiment and the pressure sensor with heater 10a according to the second embodiment. Verification whose results are shown in FIG. 10 is similar to that whose results are shown in FIG. 5.

According to the results of the verification, pressure per unit torque (Δ bar/N·m) in the pressure sensor with heater 10a according to the second embodiment reduced by about 44% that of the pressure sensor with heater 10 according to the first embodiment.

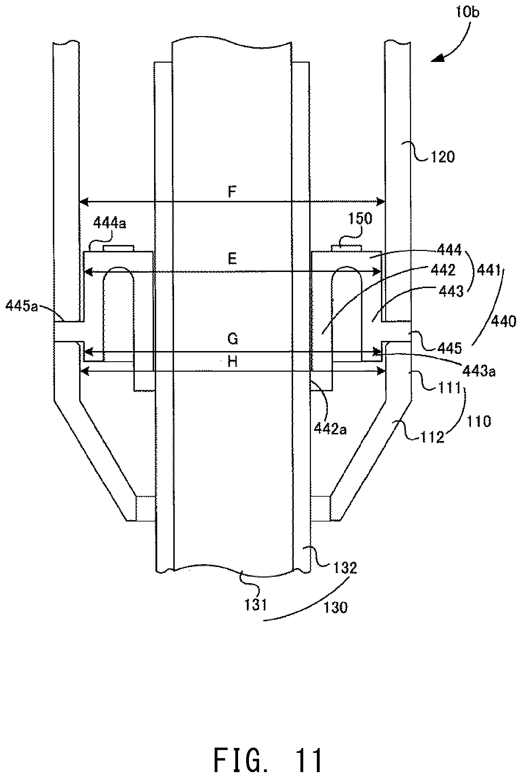

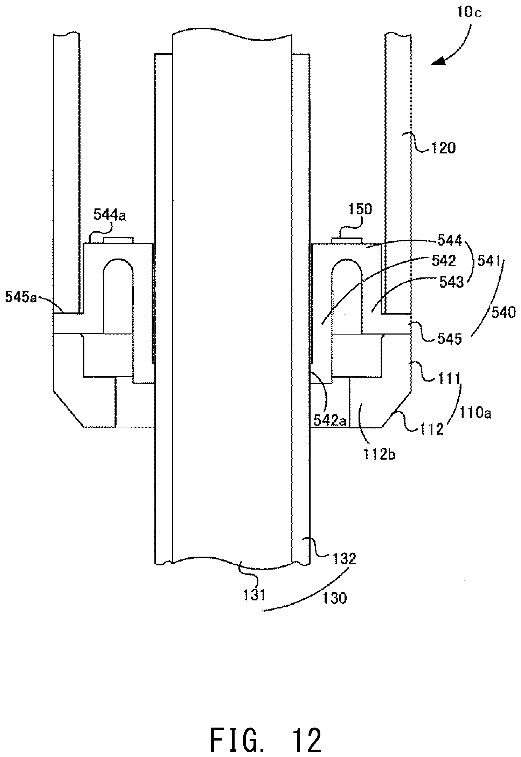

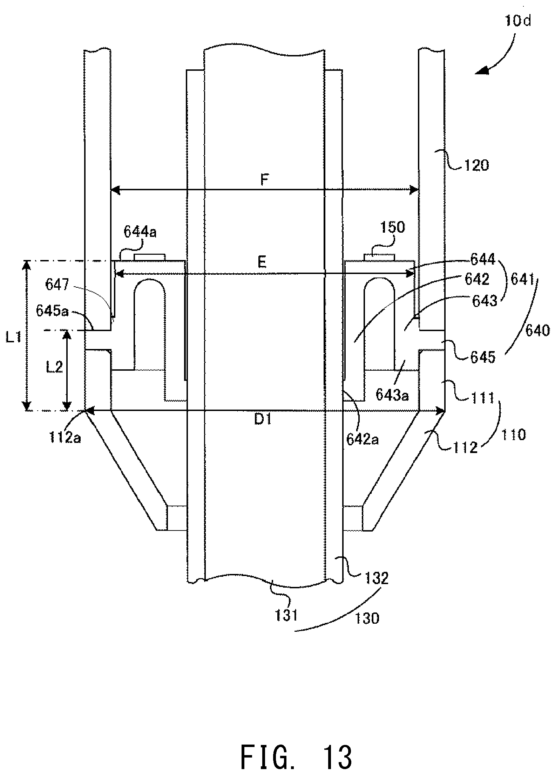

Modified embodiments:
(1) The first embodiment and the second embodiment have been described while referring to the pressure sensors with heater 10 and 10a having a relation of the outside diameter D1 > the axial length L1 > the axial length L2. However, a pressure sensor with heater having a relation of the outside diameter D1 ≥ the axial length L1 ≥ the axial length L2 (mm) can also solve technical problems similar to those solved by the pressure sensors with heater 10 and 10a according to the first and second embodiments, respectively.
(2) A pressure sensor with heater 10b according to a second modified embodiment will be described. FIG. 11 is an explanatory view schematically showing a section of a portion of the pressure sensor with heater 10b according to the second modified embodiment, which portion is located in the vicinity of the forward end of the housing thereof. The pressure sensor with heater 10b according to the second modified embodiment has a relation of a diameter H (mm) of the inner circumferential surface of the first housing 110 (cylindrical portion 111) > E, in addition to a relation of E < F. By virtue of such a structural feature, axial stress is more imposed on the first housing 110, whereby warpage of a body portion 444 can be restrained, and thus an output error of the sensor element 150 can be further reduced.
   Further, in the pressure sensor with heater 10b according to the second modified embodiment, in addition to a relation of E < F, the outer circumferential surface of an extension portion 443a of a second annular wall 443 of a heater holder 440 is located away from the inner circumferential surface of the first housing 110. That is, the pressure sensor with heater 10b has a relation of a diameter G (mm) of the extension portion 443a of the second annular wall 443 < H. By virtue of such a structural feature, while axial stress is more imposed on the first housing 110, axial stress is unlikely to be imposed on the extension portion 443a, whereby warpage of the body portion 444 can be restrained, and thus an output error of the sensor element 150 can be further reduced.
(3) A pressure sensor with heater 10c according to a third modified embodiment will be described. FIG. 12 is an explanatory view schematically showing a section of a portion of the pressure sensor with heater 10c according to the third modified embodiment, which portion is located in the vicinity of the forward end of the housing thereof. In the pressure sensor with heater 10c according to the third modified embodiment, a heater holder 540 does not have an extension portion. Also, in the pressure sensor with heater 10c according to the third modified embodiment, a first housing 110a has a thick-walled forward end portion 112b. The thick-walled forward end portion 112b means that the first housing 110a has a larger thickness at least at a forward end portion thereof than those of other portions.
(4) A pressure sensor with heater 10d according to a fourth modified embodiment will be described. FIG. 13 is an explanatory view schematically showing a section of a portion of the pressure sensor with heater 10d according to the fourth modified embodiment, which portion is located in the vicinity of the forward end of the housing thereof. In the pressure sensor with heater 10d according to the fourth modified embodiment, a heater holder 640 has a contact portion 647 which is formed on a forward portion of a second annular wall 643 and is in contact with the second housing 120. A rearward portion of the second annular wall 643 serves as a facing portion located away from the inner circumferential surface of the second housing 120. By virtue of such a structural feature, even in a structure having the facing portion located away from the second housing 120, the heater holder 640 can be favorably fixed to the second housing 120 by means of the contact portion 647.
(5) In the pressure sensors with heater 10 and 10a according to the first and second embodiments, respectively, the first housing 110 has the cylindrical portion 111 and the seal portion 112; however, the first housing 110 may further has a second cylindrical portion extending forward in the axial direction from the seal portion 112.

The present invention has been described with reference to the above embodiments and modified embodiments. However, the embodiments and modified embodiments are meant to help understand the invention, but are not meant to limit the invention. The present invention may be modified or improved without departing from the gist and the scope of the invention and encompasses equivalents thereof. For example, in order to solve, partially or entirely, the above-mentioned problem or yield, partially or entirely, the above-mentioned effects, technical features of the embodiments and modified embodiments corresponding to technical features of the modes described in the section "Summary of the Invention" can be replaced or combined as appropriate. Also, the technical feature(s) may be eliminated as appropriate unless the present specification mentions that the technical feature(s) is mandatory.

### [Description of Reference Numerals]

- 10, 10a, 10b, 10c, 10d:: pressure sensor with heater
- 100:: housing
- 110, 110a:: first housing
- 111:: cylindrical portion
- 112:: seal portion
- 112a:: rear end of seal portion
- 112b:: forward end portion
- 120:: second housing
- 121:: threaded portion
- 122:: collar portion
- 130:: heater
- 131:: heater member
- 131a:: substrate
- 132:: sleeve
- 133:: axial rod
- 134:: ring
- 140, 340, 440, 540, 640:: heater holder
- 141, 341, 441, 541, 641:: body portion
- 142, 342, 442, 542, 642:: first annular wall
- 142a, 342a, 442a, 542a, 642a:: protrusion
- 143, 343, 443, 543, 643:: second annular wall
- 143a, 343a, 443a, 643a:: extension portion
- 144, 344, 444, 544, 644:: connection wall
- 144a, 344a, 444a, 544a, 644a:: rearward facing surface
- 145, 345, 445, 545, 645:: flange portion
- 145a, 345a, 445a, 545a, 645a:: rearward facing surface
- 146:: groove
- 150:: sensor element
- 170:: heater holder
- 174:: connection wall
- 174a:: rearward facing surface
- 175:: flange portion
- 175a:: rearward facing surface
- 200:: connector member
- 210:: protection tube
- 220:: terminal member
- 240:: terminal spring
- 647:: contact portion
- D1:: outside diameter
- L1, L2:: length along axial direction (axial length)
- E, F, G:: diameter of outer circumferential surface

## Claims

1. A pressure sensor with heater (10, 10a, 10b, 10c, 10d) comprising:
a tubular housing (100) extending in an axial direction and having a forward end and a rear end;
a rodlike heater (130) which is disposed in the housing (100) in such a manner as to be displaceable in the axial direction and whose forward portion protrudes from the forward end of the housing (100);
an annular heater holder (140, 340, 440, 540, 640) through which the heater (130) is inserted and which connects the housing (100) and the heater (130); and
a sensor element (150) disposed on the heater holder (140, 340, 440, 540, and 640) and adapted to detect a displacement of the heater (130), wherein:
the housing (100) comprises a first housing (110) located on a forward side with respect to the axial direction and a second housing (120) located rearward of the first housing (110), the first housing (110) having a seal portion (112) and a cylindrical portion (111), the seal portion (112) reducing in diameter toward the forward side and at least partially coming into contact with an attachment object body when the pressure sensor with heater (10, 10a, 10b, 10c, 10d) is attached to the attachment object body, the cylindrical portion (111) extending rearward of the seal portion (112) in the axial direction;
the heater holder (140, 340, 440, 540, 640) has a body portion (141, 341, 441, 541, 641) having an annular rearward facing surface (144a, 344a, 444a, 544a, 644a) facing a rear side with respect to the axial direction and a flange portion (145, 345, 445, 545, 645) protruding from an outer circumferential surface of the body portion (141, 341, 441, 541, 641) and fixed between the first housing (110) and the second housing (120), and seals a space between an inner circumferential surface of the second housing (120) and an outer circumferential surface of the heater (130);
the sensor element (150) is mounted on the rearward facing surface (144a, 344a, 444a, 544a, 644a) of the body portion (141, 341, 441, 541, 641) of the heater holder (140, 340, 440, 540, 640); and
a relation of D1 ≥ L1 ≥ L2 holds among an outside diameter D1 (mm) of a rear end (112a) of the seal portion (112), an axial length L1 (mm) from the rear end (112a) of the seal portion (112) to the rearward facing surface (144a, 344a, 444a, 544a, 644a) of the body portion (141, 341, 441, 541, 641), and an axial length L2 (mm) from the rear end (112a) of the seal portion (112) to a rearward facing surface (145a, 345a, 445a, 545a, 645a) of the flange portion (145, 345, 445, 545, 645).

2. A pressure sensor with heater (10, 10a, 10b, 10c, 10d) according to claim 1, wherein:
the axial length L1 and the axial length L2 hold a relation of L1 > L2;
the heater holder (140, 340, 440, 540, 640) has a facing portion (143, 343, 443, 543, 643) provided at at least the rear side of the body portion (141, 341, 441, 541, 641) of the heater holder (140, 340, 440, 540, 640) and facing the second housing (120); and
an outer circumferential surface of the facing portion (143, 343, 443, 543, 643) of the heater holder (140, 340, 440, 540, 640) is located away from an inner circumferential surface of the second housing (120).

3. A pressure sensor with heater (10, 10a, 10b, 10c, 10d) according to claim 2, wherein an axial length L3 (mm) of the facing portion (143, 343, 443, 543, 643) and an outside diameter D2 (mm) of the rearward facing surface (144a, 344a, 444a, 544a, 644a) hold a relation of L3 > D2/2.

4. A pressure sensor with heater (10d) according to claim 2 or 3, wherein the body portion (641) of the heater holder (640) has a contact portion (647) in contact with the second housing (120) and located forward of the facing portion (643).

5. A pressure sensor with heater (10, 10a, 10b, 10c, 10d) according to any one of claims 2 to 4, wherein an inside diameter (H) of the cylindrical portion (111) is greater than an outside diameter (E) of the facing portion (143, 343, 443, 543, 643).

6. A pressure sensor with heater (10, 10a, 10b, 10d) according to any one of claims 1 to 5, wherein:
the body portion (141, 341, 441, 641) of the heater holder (140, 340, 440, 640) has an extension portion (143a, 343a, 443a, 643a) extending forward of the flange portion (145, 345, 445, 645), and
an outer circumferential surface of the extension portion (143a, 343a, 443a, 643a) of the heater holder (140, 340, 440, 640) is located away from an inner circumferential surface of the first housing (110).

7. A pressure sensor with heater (10, 10a, 10b, 10c, 10d) according to any one of claims 1 to 6, wherein:
the body portion (141, 341, 441, 541, 641) of the heater holder (140, 340, 440, 540, 640) comprises
a first annular wall (142, 342, 442, 542, 642) in contact with the outer circumferential surface of the heater (130),
a second annular wall (143, 343, 443, 543, 643) facing the inner circumferential surface of the second housing (120) and shorter than the first annular wall (142, 342, 442, 542, 642),
a connection wall (144, 344, 444, 544, 644) having the rearward facing surface (144a, 344a, 444a, 544a, 644a) and connecting the first annular wall (142, 342, 442, 542, 642) and the second annular wall (143, 343, 443, 543, 643), and
an annular groove (146) defined by the first annular wall (142, 342, 442, 542, 642), the second annular wall (143, 343, 443, 543, 643), and the connection wall (144, 344, 444, 544, 644); and
the flange portion (145, 345, 445, 545, 645) is formed on an outer circumferential surface of the second annular wall (143, 343, 443, 543, 643) .
